# EUROPÄISCHE PATENTSCHRIFT

(11) **EP 1 682 298 B1**
(45) Veröffentlichungstag und Bekanntmachung des Hinweises auf die Patenterteilung: **28.01.2015**
(21) Anmeldenummer: 04818385.9
(22) Anmeldetag: 05.11.2004
(51) Int. Cl.: B23B 45/02, B25F 5/00, H02P 7/295

(54) **ELEKTROWERKZEUG UND VERFAHREN ZUR STEUERUNG EINES ELEKTROWERKZEUGS**
POWER TOOL AND METHOD FOR CONTROLLING A POWER TOOL
OUTIL ELECTRIQUE ET PROCEDE DE COMMANDE D'UN OUTIL ELECTRIQUE

(30) Priorität: 11.11.2003 DE 10353302
(43) Veröffentlichungstag der Anmeldung: 26.07.2006
(73) Patentinhaber: C. & E. Fein GmbH, 73529 Schwäbisch Gmünd-Bargau (DE)
(72) Erfinder: RUDOLF, Boris, 70192 Stuttgart (DE); BRAUN, Sigmund, 72127 Kusterdingen (DE)
(74) Vertreter: Gahlert, Stefan
(86) Internationale Anmeldenummer: PCT/EP2004/012545
(87) Internationale Veröffentlichungsnummer: WO 2005/046916

(56) Entgegenhaltungen:
- EP-A- 0 808 018
- EP-A- 1 073 191
- EP-A- 1 284 427
- DE-A1- 3 317 398
- US-B1- 6 424 112

## Beschreibung

Die Erfindung betrifft ein Elektrowerkzeug mit einer Steuereinrichtung zum Steuern mindestens eines Betriebsparameters, mit einem Motor zum Antrieb eines Werkzeuges, und mit einem Drehzahlsensor zur Überwachung der Drehzahl des Motors zur Erzeugung eines Drehzahlsignals, sowie ein Verfahren zum Steuern eines Elektrowerkzeugs.

Ein ähnliches Elektrowerkzeug ist aus der US 6,424,112 bekannt.

Bei dem bekannten Elektrowerkzeug ist eine Geschwindigkeitssteuereinrichtung vorgesehen, die mit einem Belastungssensor für einen Elektromotor des Elektrowerkzeuges gekoppelt ist. Abhängig von einem durch den Belastungssensor erzeugten Signal sowie von Benutzereingaben kann der Elektromotor geeignet angesteuert werden, um ein gewünschtes Niveau einer Ausgangsgeschwindigkeit oder einer Ausgangsleistung zu erzielen.

Ein weiteres ähnliches Elektrowerkzeug ist ferner aus der EP 0 808 018 A1 bekannt.

Hierbei handelt es sich um ein Elektrowerkzeug mit einer Motorkontrollschaltung, die dazu ausgebildet ist, einen Motor des Elektrowerkzeugs alternierend an oder auszuschalten. Auf diese Weise soll ein pulsierender Betrieb des Motors ermöglicht sein, um ein Ausgangsmoment des Elektromotors zu erhöhen.

Ferner zeigt die EP 1 284 427 A2 eine lichtoptische Kontrolleinrichtung, die als Schalteinrichtung, Regeleinrichtung oder Sensoreinrichtung für ein Elektrowerkzeug anwendbar ist.

Elektrowerkzeuge sind vielfach mit elektronischen Regelungen zur Drehzahlsteuerung des Antriebsmotors ausgestattet. Zur Einstellung dient hierbei in der Regel ein Stellrad oder dergleichen, das während des Betriebs des Elektrowerkzeuges nur schlecht zu betätigen ist.

Bei manchen Elektrowerkzeugen wäre es jedoch vorteilhaft, wenn eine Drehzahlverstellung auch während des Arbeitens, insbesondere auch unter Last, erfolgen könnte. Daneben wäre es vorteilhaft, wenn neben der Drehzahl auch andere Betriebsparameter auf einfache Weise gesteuert werden könnten.

Der Erfindung liegt somit die Aufgabe zu Grunde, ein Elektrowerkzeug und ein Verfahren zum Steuern eines Elektrowerkzeuges zu schaffen, womit ein Betriebsparameter auf einfache Weise möglichst auch während des Betriebs gesteuert werden kann. Hierbei soll eine einfache und zuverlässige Handhabung ermöglicht sein.

Diese Aufgabe wird erfindungsgemäß durch ein Elektrowerkzeug mit einer Steuereinrichtung zum Steuern mindestens eines Betriebsparameters gelöst, mit einem Motor zum Antrieb eines Werkzeuges, mit mindestens drei durch einen Benutzer betätigbaren Schaltelementen, die mit der Steuereinrichtung gekoppelt sind, und mit einem Drehzahlsensor zur Überwachung der Drehzahl des Motors zur Erzeugung eines Drehzahlsignals, das der Steuereinrichtung zugeführt ist, wobei die Steuereinrichtung derart ausgebildet ist, dass in Abhängigkeit von dem Drehzahlsignal bei gleichzeitiger Betätigung von einem ersten und mindestens einem weiteren der Schaltelemente ein Steuersignal zur Änderung des Betriebsparameters ausgegeben wird, und das in Abhängigkeit von dem Drehzahlsignal bei gleichzeitiger Betätigung des ersten und mindestens eines anderen Schaltelementes ein Steuersignal zu einer modifizierten Änderung des Betriebsparameters ausgegeben wird.

Die Aufgabe wird ferner durch ein Verfahren zur Steuerung mindestens eines Betriebsparameters eines Elektrowerkzeuges gelöst, das einen Motor zum Antrieb eines Werkzeuges sowie mindestens drei durch einen Benutzer betätigbare Schaltelemente aufweist, die mit einer Steuereinrichtung zur Steuerung des Betriebsparameters gekoppelt sind, mit folgenden Schritten:
- Überwachen der Drehzahl des Motors;
- Überwachen der Betriebszustände der Schaltelemente;
- Steuern eines Betriebsparameters in Abhängigkeit von der Drehzahl des Motors und von den Schaltzuständen der Schaltelemente, wobei nur bei einer bestimmten Kombination, bei der ein Schaltelement und mindestens ein weiteres Schaltelement gleichzeitig betätigt werden, ein Steuersignal zur Änderung des Betriebsparameters ausgegeben wird, während bei einer bestimmten anderen Kombination, bei der das Schaltelement und mindestens ein anderes Schaltelement gleichzeitig betätigt werden, ein modifiziertes Steuersignal zu einer modifizierten Änderung des Betriebsparameters ausgegeben wird.

Die Aufgabe der Erfindung wird auf diese Weise vollkommen gelöst.

Erfindungsgemäß erfolgt nämlich die Überwachung der Drehzahl des Motors einerseits und der Schaltzustände der Schaltelemente andererseits in Abhängigkeit von der Drehzahl und den erfassten Schaltzuständen der Schaltelemente derart, dass immer zumindest zwei bestimmte Schaltelemente gleichzeitig betätigt werden müssen und der Motor eine bestimmte Drehzahl haben muss, die gleich Null oder größer Null sein kann, damit ein bestimmtes Steuersignal zur Änderung eines Betriebsparameters erzeugt wird, während bei der Betätigung mindestens eines anderen Schaltelementes ein modifiziertes Steuersignal zu einer anderen Änderung des Betriebsparameters ausgegeben wird.

Auf diese Weise besteht eine große Flexibilität bei der Auswahl der zu steuernden Betriebsparameter und bei der Auswahl der Schaltkombinationen von verschiedenen Schaltelementen, um in Abhängigkeit von der erfassten Drehzahl des Elektrowerkzeuges ein bestimmtes Steuersignal auszugeben. Insbesondere, wenn die Steuereinrichtung einen Mikroprozessor umfasst, können verschiedene Steuerungsstrategien zur Steuerung eines oder mehrerer Betriebsparameter softwaremäßig realisiert werden. Bei dem zu steuernden Betriebsparameter kann es sich bspw. um die Drehzahl des Motors handeln. Des Weiteren ist es bei solchen Elektrowerkzeugen, bei denen eine Umschaltung zwischen Rechtslauf und Linkslauf ermöglicht ist, denkbar, die Einstellung Rechtslauf/Linkslauf in Abhängigkeit von den Schaltzuständen bestimmter Schaltelemente zu steuern. Abgesehen von diesen beiden möglichen Betriebsparametern, die erfindungsgemäß überwacht bzw. gesteuert werden können, ist die Überwachung bzw. Einstellung weiterer Betriebsparameter denkbar, wobei es sich bspw. um ein Abschaltmoment eines Schraubers oder um einen Sicherheitswert handeln könnte, bei dem die Stromzufuhr zum Motor unterbrochen wird, um einen Überlast- oder Gefährdungszustand zu vermeiden.

Gemäß einer ersten Ausgestaltung der Erfindung ist der zu steuernde Betriebsparameter die Drehzahl des Motors, wobei die Steuereinrichtung derart ausgebildet ist, dass bei laufendem Motor (Drehzahl n>0) und bei gleichzeitiger Betätigung des ersten Schaltelementes und eines zweiten Schaltelementes ein Steuersignal zur Erniedrigung der Drehzahl ausgegeben wird, und wobei bei laufendem Motor und bei gleichzeitiger Betätigung des ersten Schaltelementes und eines dritten Schaltelementes ein Steuersignal zur Erhöhung der Drehzahl ausgegeben wird.

Obwohl es grundsätzlich nicht ausgeschlossen wäre, auch bei stehendem Motor eine veränderte Einstellung der Soll-Drehzahl zu erlauben, ist es aus Sicherheitsgründen bevorzugt, eine solche Einstellung nur während des Betriebs zuzulassen. Dies ist auch vorteilhaft für den Benutzer, da er sogleich die veränderte Einstellung der Drehzahl unmittelbar wahrnehmen kann. Dies ist sogar beim Arbeiten unter Last möglich.

Deshalb ist es gemäß einer weiteren Ausführung der Erfindung bevorzugt, dass bei stehendem Motor kein Steuersignal zur Veränderung der Drehzahl ausgegeben wird.

Gemäß einer weiteren Ausführung der Erfindung ist die Steuereinrichtung derart ausgebildet, dass bei gleichzeitiger Betätigung des ersten und zweiten Schaltelementes oder des ersten und dritten Schaltelementes der Sollwert der Drehzahl kontinuierlich verändert wird, bis entweder ein Grenzwert erreicht ist oder mindestens eines der Schaltelemente deaktiviert wird.

Auf diese Weise wird eine kontinuierliche Veränderung des Drehzahlsollwertes ermöglicht, um so eine stufenlose Einstellung des Drehzahlsollwertes zu gestatten.

Gemäß einer alternativen Ausführung der Erfindung ist die Steuereinrichtung derart ausgebildet, dass bei gleichzeitiger Betätigung des ersten und zweiten Schaltelementes oder des ersten und dritten Schaltelementes der Sollwert der Drehzahl um eine vorgegebene Drehzahlstufe, maximal jedoch bis zum Erreichen eines Grenzwertes, verändert wird, und dass zu einer weiteren Veränderung der Drehzahl die Deaktivierung zumindest eines Schaltelementes und anschließend Betätigung des ersten und zweiten oder des ersten und dritten Schaltelementes erforderlich ist.

Auch mit einer derartigen stufenweisen Veränderung der Drehzahl, bspw. durch Festhalten des ersten Schaltelementes und abwechselndes Betätigen eines weiteren Schaltelementes, lässt sich eine für den Benutzer einfache Drehzahlverstellung realisieren, wobei auch bestimmte, vorgegebene Drehzahlstufen eingestellt werden können.

In zusätzlicher Weiterbildung der Erfindung ist ein Speichermittel zum Speichern eines zuletzt eingestellten Drehzahlsollwertes vorgesehen, der zum Zeitpunkt der Deaktivierung von mindestens einem der zuvor zur Drehzahleinstellung betätigten Schaltelemente von der Steuereinrichtung ausgegeben ist.

Hierbei kann das Speichermittel derart ausgebildet sein, dass ein gespeicherter Drehzahlsollwert auch nach Stillstand oder Abschalten des Motors erhalten bleibt. Auf diese Weise kann ein einmal eingestellter Drehzahlsollwert während des Arbeitens mit dem Elektrowerkzeug eingehalten werden oder die Maschine auch nach Abschalten und erneutem Wiedereinschalten des Motors wieder auf den Drehzahlsollwert eingestellt werden. Ferner ist nach Abschaltung eine Einstellung auf einen bestimmten Normdrehzahlwert denkbar, der ggf. fest einprogrammiert werden kann, oder der durch Betätigen einer bestimmten Kombination von Schaltelementen abgespeichert werden kann.

Gemäß einer weiteren Ausführung der Erfindung ist ein zu steuernder Betriebsparameter die Einstellung Rechts-/Linkslauf, wobei bei Betätigung eines ersten und eines weiteren Schaltelementes ein Steuersignal zur Einstellung des Motors auf Rechtslauf ausgegeben wird, und wobei bei Betätigung des ersten und mindestens eines anderen Schaltelementes ein Steuersignal zur Einstellung des Motors auf Linkslauf ausgegeben wird.

Grundsätzlich ist es möglich, bei Verwendung einer mikroprozessorgesteuerten Steuereinrichtung diese Umschaltung zwischen Rechts- und Linkslauf bereits bei laufendem Motor vorzunehmen. In diesem Fall erkennt die Steuereinrichtung das Umschaltsignal, fährt den Motor auf eine Drehzahl von 0 herunter und stellt dann die Drehrichtung um. Alternativ kann die Steuerung auch so ausgelegt sein, dass ein Steuerungsbefehl über Betätigung der Schaltelemente nur dann angenommen wird, wenn der Motor steht (n=0). Auf diese Weise kann ein für den Benutzer klar erkennbares Bedienungskonzept genutzt werden.

Gemäß einer weiteren Ausführung der Erfindung weist das Elektrowerkzeug ein Gehäuse auf, das einen linken Griffbereich und einen rechten Griffbereich besitzt, wobei im linken und rechten Griffbereich Aktivierungsorgane für das zweite und dritte Schaltelement vorgesehen sind.

Auf diese Weise können die verschiedenen Schaltelemente im Griffbereich zum Halten des Elektrowerkzeuges untergebracht werden, um so eine besonders ergonomische Bedienung zu ermöglichen.

Gemäß einer weiteren Ausgestaltung der Erfindung weist das Gehäuse einen mittleren Bereich auf, an dem ein Aktivierungsorgan für das erste Schaltelement vorgesehen ist.

So kann das erste Schaltelement, das bei verschiedenen Varianten der Erfindung zwingend betätigt werden muss, um eine veränderte Einstellung des zu steuernden Betriebsparameters einzuleiten, zentral erreichbar angeordnet werden.

Gemäß einer weiteren Ausgestaltung der Erfindung sind die Aktivierungsorgane zur Betätigung der Schaltelemente als elastische Tastflächen ausgebildet.

Auf diese Weise lässt sich eine besonders ergonomische Gestaltung des Elektrowerkzeuges erreichen.

Gemäß einer weiteren Ausgestaltung der Erfindung, die insbesondere bei der Ausgestaltung des Elektrowerkzeuges als Winkelschleifer bevorzugt ist, ist das Gehäuse im Wesentlichen stabförmig ausgebildet und weist an einem Ende des Gehäuses einen Getriebekopf auf, an dem das erste Schaltelement aufgenommen ist, während das zweite und dritte Schaltelement auf der linken und rechten Gehäuseseite vorgesehen sind.

Hierbei ist vorzugsweise das Gehäuse derart bemessen, dass ein Umgreifen mit einer Hand ermöglicht ist, wobei die elastischen Tastflächen für das zweite und dritte Schaltelement im Griffbereich von Daumen einerseits und Zeigefinger oder Mittelfinger andererseits angeordnet sind.

Auf diese Weise wird eine besonders ergonomische Gestaltung und Handhabung insbesondere für den Fall eines Winkelschleifers ermöglicht.

Gemäß einer alternativen Ausführung der Erfindung, die insbesondere bei der Ausführung des Elektrowerkzeuges als Schrauber oder Bohrer vorteilhaft ist, ist das Gehäuse im Wesentlichen pistolenförmig ausgebildet, wobei die Tastfläche für das erste Schaltelement in der Mitte eines Pistolengriffs im Griffbereich vom Zeigefinger angeordnet ist und die Tastflächen für das zweite und dritte Schaltelement an der rechten und linken Gehäuseseite angeordnet sind.

Auf diese Weise kann ein Halten des Elektrowerkzeugs am Pistolengriff kombiniert werden mit einer bewussten Betätigung des zweiten und dritten Schaltelementes zur Verstellung des Betriebsparameters, was nur mit der anderen Hand ermöglicht ist.

Gemäß einer weiteren Ausgestaltung der Erfindung weist das Elektrowerkzeug ein viertes und ein fünftes Schaltelement auf, wobei die Steuereinrichtung derart ausgebildet ist, dass zur Drehzahlerhöhung das erste Schaltelement und wahlweise das zweite oder vierte Schaltelement und zur Drehzahlerniedrigung das erste und wahlweise das dritte oder fünfte Schaltelement zu betätigen sind.

Hierbei befinden sich die Tastflächen zur Aktivierung des vierten und fünften Schaltelementes vorzugsweise auf der linken und rechten Gehäuseseite am dem Getriebekopf gegenüberliegenden Ende des Gehäuses.

Somit kann eine für einen Benutzer einprägsame Verstellmöglichkeit zur Einstellung des Betriebsparameters etwa derart vorgegeben werden, dass zumindest eines der beiden auf der linken Gehäuseseite angeordneten Schaltelemente in Kombination mit dem ersten Schaltelement betätigt werden muss, um etwa eine Erniedrigung der Drehzahl herbeizuführen. Umgekehrt muss dann zu einer Erhöhung der Drehzahl das erste Schaltelement und eines der beiden auf der rechten Gehäuseseite angeordneten Schaltelemente betätigt werden.

Gemäß einer weiteren Ausgestaltung der Erfindung ist die Steuereinrichtung derart ausgebildet, dass ein Einschalten des Motors nur bei gleichzeitiger Betätigung von mindestens zwei Schaltelementen ermöglicht ist.

Hierbei ist bevorzugt die Steuereinrichtung derart ausgebildet, dass ein Einschalten des Motors nur bei gleichzeitiger Betätigung eines in einem vorderen Bereich des Gehäuses angeordneten und eines in einem hinteren Bereich des Gehäuses angeordneten Schaltelementes ermöglicht ist.

Auf diese Weise kann gewährleistet werden, dass beim Ergreifen des Elektrowerkzeuges im Bereich von elastischen Tastflächen, über die die zugeordneten Schaltelemente aktiviert werden können, nur dann ein Anlaufen des Motors ermöglicht ist, wenn mit einer zweiten Hand eine weitere Tastfläche betätigt wird. Hierdurch wird eine erhöhte Sicherheit gewährleistet, da so eine Zweihandbetätigung notwendig ist, um den Motor zu starten.

Gemäß einer weiteren Ausgestaltung der Erfindung ist ein optisches Indikatorelement zur Anzeige eines eingestellten Betriebsparameters vorgesehen.

Auch hierdurch wird die Sicherheit erhöht und das Arbeiten für den Benutzer erleichtert, da optisch jederzeit erkennbar ist, welcher Betriebsparameter eingestellt wurde, also bspw. welche Soll-Drehzahl eingestellt wurde oder ob Rechts-/Linkslauf eingestellt wurde.

Gemäß einer weiteren Ausgestaltung der Erfindung ist mindestens eines der Schaltelemente als optisches Schaltelement ausgebildet mittels dessen ein von einem Sendeleiter ausgesandter Lichtstrahl, der einem Empfangsleiter zugeführt wird, beeinflusst wird und die Veränderung des in den Empfangsleiter eingekoppelten Lichtsignals zur Erzeugung eines Schaltsignals ausgewertet wird.

Gemäß dieser an sich grundsätzlich aus der EP-A-1 284 427 bekannten Maßnahme kann eine besonders ergonomische Gestaltung des Elektrowerkzeuges erreicht werden, da auf diese Weise eine ganze Reihe von optischen Schaltelementen an verschiedenen Positionen des Gehäuses angeordnet werden kann, da hierbei auf eine spezielle Isolierung gegenüber der Netzspannung keine Rücksicht genommen werden muss. Außerdem können die Schaltelemente miniaturisiert ausgeführt werden und eine dauerhafte Betätigung während des Betriebs über elastische Tastflächen leicht ermöglicht werden.

Im Wesentlichen ähnliche Ergebnisse lassen sich erzielen, wenn die Schaltelemente als Mikroschalter ausgebildet sind, die jeweils in einem Signalstromkreis liegen.

Hierbei kann ein Leistungselement, das zur Steuerung des Motors in einem Laststromkreis liegt, vorzugsweise galvanisch getrennt von den Mikroschaltern, ausgeführt sein. Dies hat den Vorteil, dass - wie auch bei der Ausgestaltung mit optischen Schaltelementen - keine Rücksicht auf Schutzbestimmungen bezüglich galvanischer Trennung von der Netzspannung genommen werden muss. Daher können die betreffenden Mikroschalter wie auch die optischen Schaltelemente ergonomisch besonders günstig platziert werden.

Wie bereits erwähnt, wird in vorteilhafter Weiterbildung des erfindungsgemäßen Verfahrens als Betriebsparameter die Drehzahl des Motors gesteuert, und bei gleichzeitiger Betätigung des ersten und eines weiteren Schaltelementes ist ein Steuersignal zur Drehzahlerniedrigung ausgegeben, während bei gleichzeitiger Betätigung des ersten und eines anderen Schaltelementes ein Steuersignal zur Drehzahlerhöhung ausgegeben wird.

Wie gleichfalls bereits erwähnt, wird in vorteilhafter Weiterbildung des erfindungsgemäßen Verfahrens als Betriebsparameter die Einstellung Rechts-/Linkslauf gesteuert und bei Betätigung des ersten und eines weiteren Schaltelementes ein Steuersignal zur Einstellung des Motors auf Rechtslauf ausgegeben, und bei Betätigung des ersten und mindestens eines anderen Schaltelementes ein Steuersignal zur Einstellung des Motors auf Linkslauf ausgegeben.

Sofern gewünscht, kann ein Anlaufen des Motors nur dann ermöglicht werden, wenn mindestens zwei der Schaltelemente gleichzeitig betätigt werden.

Gemäß einer weiteren Ausgestaltung der Erfindung wird bei laufendem Motor bei einer Deaktivierung bestimmter Schaltelemente ein Signal zum Anhalten des Motors erzeugt, womit gleichzeitig eine Bremsung des Motors eingeleitet werden kann.

Hierdurch kann eine erhöhte Sicherheit insbesondere bei solchen Elektrowerkzeugen gewährleistet werden, von denen ein relativ hohes Gefährdungspotenzial ausgeht, wie etwa Winkelschleifern, Kreissägen oder dergleichen.

In Zusammenspiel mit der notwendigen Betätigung des ersten Schaltelementes zur Aktivierung des Einstellvorgangs für die Drehzahlverstellung und mit der Betätigung eines Schaltelementes auf der rechten Gehäuseseite zur Drehzahlerhöhung und auf der linken Seite zur Erniedrigung der Drehzahl ergibt sich so für den Benutzer ein einprägsames Bedienungskonzept: Zum Starten des Motors müssen gleichzeitig zwei Schaltelemente auf der in einem vorderen und einem hinteren Bereich des Gehäuses gleichzeitig aktiviert werden, so dass ein bewusstes Einschalten des Elektrowerkzeuges gewährleistet ist und ein Loslaufen des Motors beim bloßen Ergreifen des Elektrowerkzeuges mit einer Hand vermieden wird. Soll nun die Drehzahl verstellt werden, so muss bei laufendem Motor das erste Schaltelement in der Mitte des Gehäuses betätigt werden und gleichzeitig ein Schaltelement auf der linken oder rechten Gehäuseseite zur Erniedrigung oder zur Erhöhung der Drehzahl. Das Letztere kann mit der Hand erfolgen, mit der auch das Elektrowerkzeug gehalten wird.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele und Bezugnahme auf die Zeichnung. Es zeigen:
- Fig. 1: eine Ansicht einer ersten Ausführung eines erfindungsgemäßen Elektrowerkzeuges in Form eines Winkelschleifers von oben;
- Fig. 2: eine vereinfachte Prinzipschaltung des Elektrowerkzeuges gemäß Fig. 1; und
- Fig. 3: eine Seitenansicht eines weiteren erfindungsgemäßen Elektrowerkzeuges in Form eines Schraubers oder Bohrers.

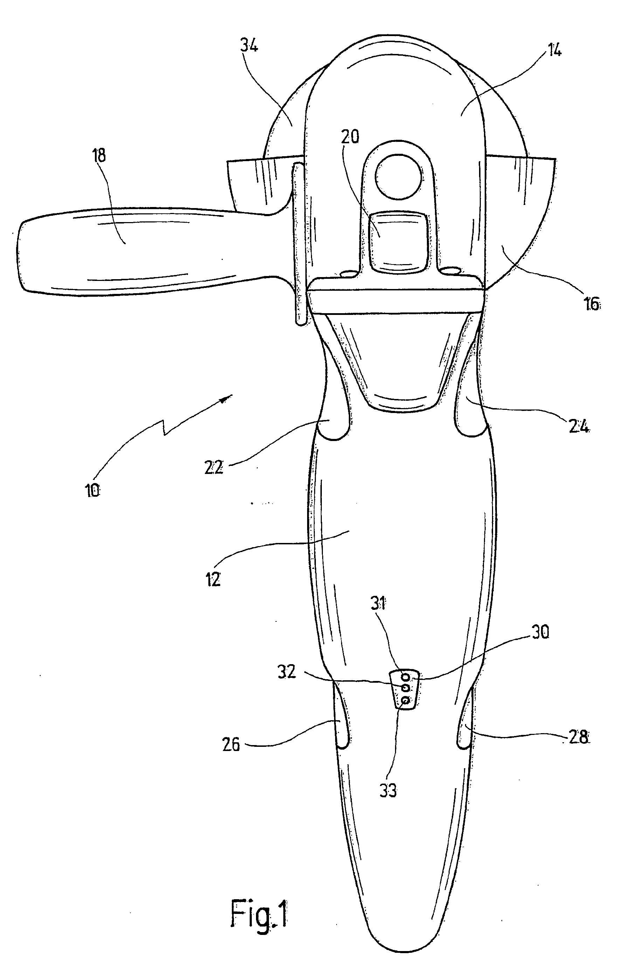

In Fig. 1 ist ein erfindungsgemäßes Elektrowerkzeug, das als Winkelschleifer ausgeführt ist, insgesamt mit der Ziffer 10 bezeichnet.

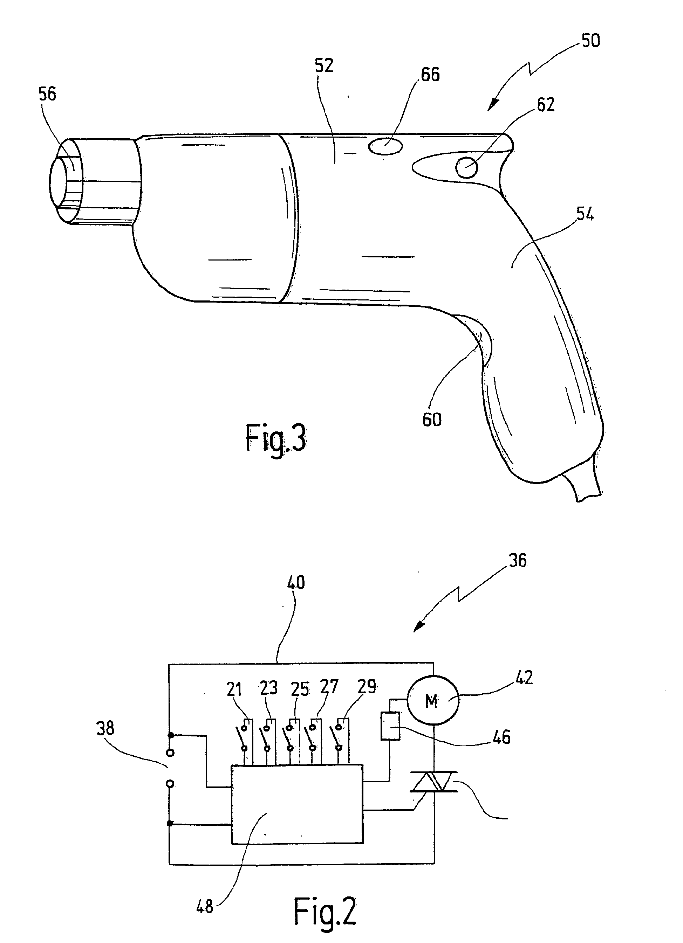

Eine vereinfachte Prinzipschaltung des Elektrowerkzeuges 10 gemäß Fig. 1 ist in Fig. 2 insgesamt mit der Ziffer 36 bezeichnet.

Das Elektrowerkzeug 10 weist ein längliches, annähernd stabförmiges Gehäuse 12 auf, an dessen einem Ende ein Getriebekopf 14 vorgesehen ist, an dessen Unterseite eine Schutzhaube 16 aufgenommen ist. Am äußeren Ende der aus dem Getriebekopf nach außen hervorstehenden Antriebswelle ist eine Aufnahme zur Aufnahme eines Werkzeugs 34 in Form einer Schleifscheibe oder Trennscheibe vorgesehen. Links oder rechts am Getriebekopf 14 kann ein Stielhandgriff 18 angeschraubt sein, wie aus Fig. 1 zu ersehen ist.

Der Bereich des bezüglich seiner Längsachse symmetrisch ausgebildeten Gehäuses 12, der unmittelbar an den Getriebekopf 14 anschließt, ist beidseitig verjüngt, um einen Griffbereich zu bilden, an dem das Gehäuse 12 mit einer Hand leicht ergriffen und vom Daumen auf der einen Seite und von den anderen Fingern auf der anderen Seite leicht gehalten werden kann. In der Mitte des Getriebekopfes befindet sich etwa in der Höhe des Stielhandgriffes 18 eine nach oben hervorstehende erste Tastfläche 20, mittels derer ein erstes Schaltelement (vgl. Ziffer 21 gemäß Fig. 2) betätigt werden kann. Im Verjüngungsbereich des Gehäuses 12, der sich an den Getriebekopf 14 anschließt, befinden sich auf der linken und rechten Gehäuseseite zwei elastische Tastflächen, nämlich eine zweite elastische Tastfläche 22 und eine dritte elastische Tastfläche 24. Diesen elastischen Tastflächen 22, 24 sind Schaltelemente 23, 25 zugeordnet, die hierüber betätigt werden (vgl. Fig. 2).

Am dem Getriebekopf 14 gegenüberliegenden Endbereich (etwa im äußeren Drittel des Gehäuses 12) ist eine weitere beidseitige Verjüngung des Gehäuses vorgesehen. Im Verjüngungsbereich sind auf der linken Gehäuseseite und der rechten Gehäuseseite weitere Tastflächen vorgesehen, nämlich eine vierte Tastfläche 26 auf der linken Seite und eine fünfte Tastfläche 28 auf der rechten Seite. Über diese Tastflächen 26, 28 können weitere Schaltelemente 27, 29 betätigt werden (vgl. Fig. 2).

Gemäß der Prinzipschaltung 36 gemäß Fig. 2 liegt ein Motor 42 in einem Laststromkreis 40. Der Motor 42 wird über ein Leistungsschaltelement 44, bspw. in Form eines Triacs, aus einer Spannungsquelle 38 (230 V Wechselspannung) mit Spannung versorgt wird. Ggf. kann zusätzlich im Laststromkreis 40 ein Ein-/Ausschalter vorgesehen sein, über den das Gerät in Betrieb genommen wird (nicht dargestellt). Die Schaltelemente 21, 23, 25, 27, 29 sind in Form von Mikroschaltern oder optischen Schaltern ausgebildet und sind jeweils an eine gemeinsame Steuerschaltung 48 angeschlossen. Bei der dargestellten Ausführung als Mikroschalter liegt jedes dieser Schaltelemente 21 bis 29 in einem Signalstromkreis, der durch das betreffende Schaltelement geschlossen werden kann.

Als bevorzugte Variante (nicht zeichnerisch dargestellt) kann auch jedes dieser Schaltelemente 21, 23, 25, 27, 29 als optisches Schaltelement ausgebildet sein, das ein Lichtsignal, das über einen Sendeleiter zugeführt wird und über einen Empfangsleiter ausgewertet wird, optisch beeinflusst wird.

So können etwa an zwei aneinander gegenüberliegenden Enden von Sende- und Empfangsleiter einfache federbelastete Tastelemente vorgesehen sein, durch die der Lichtstrahl unterbrochen werden kann. Zwecks Details sei in diesem Zusammenhang auf die US-A-20030034164 verwiesen.

Da die Schaltelemente 21 bis 29 in Form von optischen Schaltelementen oder Mikroschaltern vorzugsweise galvanisch getrennt vom Laststromkreis 40 sind, ergibt sich so eine Berührungssicherheit unabhängig davon, an welcher Stelle die betreffenden Schaltelemente in das Elektrowerkzeug integriert sind. Auf diese Weise wird es ermöglicht, die betreffenden Schaltelemente mit den zugeordneten elastischen Tastflächen an den ergonomisch besonders günstigen Stellen anzuordnen, wie zuvor an Hand von Fig. 1 erläutert wurde.

Ferner weist die Schaltung 36 gemäß Fig. 2 einen Drehzahlsensor (Tachogenerator) 46 auf, mittels dessen die Drehzahl der Motorwelle oder einer über ein Getriebe damit verbundenen Abtriebswelle, an der die Werkzeugaufnahme vorgesehen ist, überwacht wird. Das Ausgangssignal des Drehzahlsensors 46 wird digitalisiert und der Steuereinrichtung 48 zugeführt. Die vorzugsweise mikroprozessorgesteuerte Steuereinheit 48 überwacht sämtliche Sicherheitsfunktionen des Elektrowerkzeugs 10, regelt die Leistung bzw. Drehzahl des Motors 42 über das Leistungsschaltelement 44 und ermöglicht die Einstellung bestimmter Betriebsparameter in Abhängigkeit vom Schaltzustand der Schaltelemente 21, 23, 25, 27 und 29 und in Abhängigkeit vom erhaltenen Drehzahlsignal.

Der Mikroprozessor der Steuereinrichtung 48 ist nun so programmiert, dass eine Verstellung der Soll-Drehzahl lediglich bei laufendem Motor erfolgen kann, und zwar indem gleichzeitig die erste Tastfläche 20 und eine der Tastflächen 22, 24, 26, 28 gedrückt wird, um das zugeordnete Schaltelement 21, 23, 25, 27, 29 zu betätigen. Hierbei sind die Schaltelemente 23, 27, die den Tastflächen auf der linken Gehäuseseite zugeordnet sind, in Verbindung mit dem Schaltelement 21 zur Erniedrigung der Soll-Drehzahl vorgesehen, während die Schaltelemente 25, 29, die den Tastflächen 24, 28 auf der rechten Gehäuseseite zugeordnet sind, in Verbindung mit dem Schaltelement 21 zur Erhöhung der Soll-Drehzahl dienen. Wenn also der Drehzahlsensor einen laufenden Motor signalisiert (n>0), so führt eine Betätigung der ersten Tastfläche 20 in Kombination mit der zweiten Tastfläche 22 und/oder der vierten Tastfläche 26 zu einer Erniedrigung der Soll-Drehzahl, bis ein unterer Grenzwert erreicht ist. Wird dagegen die erste Tastfläche 20 in Verbindung mit der dritten Tastfläche 24 und/oder der fünften Tastfläche 28 betätigt, so ergibt sich eine Erhöhung der Soll-Drehzahl, bis ein oberer Grenzwert erreicht ist. Wird die Tastfläche 20 bzw. eine der anderen Tastflächen losgelassen und überhaupt nur noch eine einzige Tastfläche 22, 24, 26, oder 28 aktiviert, so wird der zuletzt eingestellte Soll-Drehzahlwert gespeichert. Dieser Soll-Drehzahlwert stellt sich auch nach Ausschalten und späterem Wiederanlaufen der Maschine ein.

Es versteht sich, dass dann, wenn hier die Rede von einem Soll-Drehzahlwert ist, dieser nur im Leerlauf erreicht werden kann und dass sich naturgemäß unter Belastung andere Drehzahlen ergeben.

Zur Anzeige der Soll-Drehzahl dient gemäß Fig. 1 ein Indikatorelement 30, das sich auf der Oberseite des Gehäuses 12 etwa in der Mitte zwischen den beiden Tastflächen 26 und 28 befindet. Das Indikatorelement enthält drei LEDs 31, 32, 33, die hintereinander angeordnet sind. Das Indikatorelement 30 weist ein Sichtfeld auf, das zum dem Getriebekopf 14 gegenüberliegenden Ende hin schlank zuläuft und sich zur anderen Seite hin verbreitert. Hiermit lassen sich insgesamt fünf Drehzahleinstellungen optisch anzeigen. Leuchtet lediglich die LED 33, so zeigt dies die niedrigste Drehzahl an. Leuchtet die mittlere LED 32, so zeigt dies eine mittlere Drehzahl an, leuchtet lediglich die dem Getriebekopf 14 zugewandte LED 31, so zeigt dies die maximale Drehzahl an. Leuchten sowohl die LED 31 als auch die LED 32, so zeigt dies einen Zwischenwert zwischen einer mittleren und der höchsten Drehzahl an. Leuchtet die LED 32 und die LED 33, so zeigt dies einen Zwischenwert zwischen der mittleren Drehzahl und der niedrigsten Drehzahl an.

In Folge der verwendeten optischen Schalter oder Mikroschalter lassen sich die Schaltelemente 21, 23, 25, 27, 29 mit äußerst geringem Kraftaufwand über die zugeordneten elastischen Tastflächen 20, 22, 24, 26, 28 bedienen, die etwa aus einem nachgiebigem Kunststoff bestehen können. So kann das Elektrowerkzeug 10 durch Ergreifen des Gehäuses 12 an der Verjüngung vor dem Übergang zum Gehäusekopf 14 mit einer Hand gehalten werden, wobei beim Ergreifen mit der rechten Hand der Daumen auf der Tastfläche 22 auf der linken Gehäuseseite liegt und die Finger auf der Tastfläche 24 auf der rechten Gehäuseseite liegen.

Die Schaltlogik, über die die Steuereinheit 48 verfügt, ist nun so programmiert, dass ein Anlaufen der Maschine nur dann ermöglicht ist, wenn zusätzlich zu einem der beiden Schaltelemente 23, 25, die über die vorderen Tastflächen 22, 24 betätigt werden, auch ein Schaltelement 27 bzw. 29 über eine Tastfläche 26, 28 im hinteren Bereich des Gehäuses 12 betätigt wird. Dies ist als Sicherheit gegen ein Anlaufen des Elektrowerkzeugs 10 beim bloßen Ergreifen mit einer Hand gedacht, da zur Betätigung des hinteren Schaltelementes eine zweite Hand notwendig ist und somit zum Anlaufen des Elektrowerkzeugs 10 eine Zweihandbetätigung erforderlich ist. Nach dem Anlaufen des Motors 42 reicht die Aktivierung eines beliebigen Schaltelementes 23, 25, 27, 29 aus, um den Motor in Betrieb zu halten. Werden jedoch alle Tastflächen 22, 24, 26, 28 losgelassen, so sperrt das Leistungsschaltelement 44 vollständig, so dass die Maschine ausläuft. Ggf. kann zusätzlich auf elektronischem Wege eine Bremsung realisiert werden. Dagegen ist das über die Tastfläche 20 aktivierbare Schaltelement 21 lediglich zur Aktivierung der Drehzahlverstellung vorgesehen. Wird das Schaltelement 21 durch Drücken der Tastfläche 20 aktiviert und gleichzeitig ein Schaltelement 23 bzw. 27 auf der linken Gehäuseseite oder ein Schaltelement 25 bzw. 29 auf der rechten Gehäuseseite, so wird entweder eine Drehzahlerniedrigung oder eine Drehzahlerhöhung eingeleitet, was kontinuierlich erfolgt, bis das Schaltelement 21 wieder losgelassen wird oder aber ein unterer oder oberer Grenzwert erreicht ist.

Werden dagegen das Schaltelement 21 und gleichzeitig ein Schaltelement 23 bzw. 27 auf der linken Gehäuseseite und ein Schaltelement 25 bzw. 29 auf der rechten Gehäuseseite aktiviert, so erfolgt keine Drehzahlveränderung.

In Fig. 3 ist ein weiteres Ausführungsbeispiel eines erfindungsgemäßen Elektrowerkzeugs dargestellt und insgesamt mit der Ziffer 50 bezeichnet. Dieses Elektrowerkzeug 50 ist als Schrauber oder Bohrer mit einem pistolenförmigen Gehäuse 52 ausgeführt und weist einen Pistolengriff 54 auf. In der Mitte des Pistolengriffs 54 ist in Höhe des vom Zeigefinger umschließbaren Bereichs eine Tastfläche 60 vorgesehen, über die ein zugeordnetes Schaltelement betätigt werden kann. Am oberen einer Werkzeugaufnahme 56 der Antriebswelle gegenüberliegenden Ende sind auf der rechten und linken Gehäuseseite je eine elastische Tastfläche vorgesehen. Dabei ist in Fig. 3 nur die Tastfläche 62 auf der linken Gehäuseseite erkennbar, während die entsprechende Tastfläche auf der rechten Gehäuseseite naturgemäß nicht erkennbar ist. Da von einem Schrauber oder Bohrer kein besonderes Gefährdungspotenzial ausgeht, wie etwa bei einem Winkelschleifer, kann hierbei nun die Steuereinrichtung so gestaltet sein, dass bei Betätigung des der Tastfläche 60 zugeordneten Schaltelementes sogleich ein Anlaufen des Motors erfolgt. Die Tastfläche 62 auf der linken Gehäuseseite bzw. die zugeordnete Tastfläche auf der rechten Gehäuseseite können nun bei gleichzeitiger Betätigung der Tastfläche 60 zur Drehzahlverstellung verwendet werden. Dabei erfolgt vorzugsweise wiederum, wie auch bei der Ausführung des Elektrowerkzeugs 10 gemäß Fig. 1, bei Betätigung der Tastfläche 62 auf der linken Gehäuseseite eine Drehzahlerniedrigung und umgekehrt erfolgt bei Betätigung der Tastfläche auf der rechten Gehäuseseite bei gleichzeitiger Betätigung der Tastfläche 60 eine Drehzahlerhöhung. Da bei einem Schrauber oder Bohrer keine Zweihandbetätigung aus Sicherheitsgründen erforderlich ist, reichen hierzu also drei Tastflächen bzw. zugeordnete Schaltelemente aus, um ein Anlaufen der Maschine und eine Drehzahlverstellung zu ermöglichen. Auch hierbei ist vorzugsweise die Steuereinrichtung 48 so gestaltet, dass eine Drehzahlverstellung nur dann erfolgt, wenn der Drehzahlsensor ein Drehzahlsignal erhält und sich somit der Motor bzw. die Antriebswelle dreht.

Zusätzlich oder alternativ zu der Drehzahlverstellmöglichkeit kann nun dieses Elektrowerkzeug 50 eine elektronische Umstellmöglichkeit für Rechts-/Linkslauf aufweisen. Hierzu sind wiederum zwei Tastflächen auf der linken und rechten Gehäuseseite vorgesehen, über die zugeordnete Schaltelemente betätigt werden können. Hiervon ist naturgemäß in Fig. 3 nur die Tastfläche 66 auf der linken Gehäuseseite erkennbar, während die gegenüberliegende Tastfläche auf der rechten Gehäuseseite verdeckt ist. Diese Tastflächen sind von den anderen Tastflächen 62 deutlich nach vorne versetzt, um eine versehentliche Betätigung zu vermeiden und um eine logische Trennung zwischen den Tastflächen 62 zur Drehzahlverstellung bzw. 66 zur Einstellung Rechts-/Linkslauf vorzunehmen.

Die Anordnung kann nun so getroffen sein, dass bei gleichzeitiger Betätigung der Tastfläche 60 und der Tastfläche 66 auf der linken Gehäuseseite und bei stehendem Motor eine Umschaltung in Linkslauf erfolgt, sofern noch kein Linkslauf eingestellt ist. Wird dagegen die Tastfläche 60 und die der Tastfläche 66 gegenüberliegende Tastfläche auf der rechten Gehäuseseite gleichzeitig betätigt, so erfolgt eine Umstellung auf Rechtslauf, sofern noch kein Rechtslauf eingestellt ist.

Wird bei laufendem Motor eine der Tastflächen 66 auf der linken Gehäuseseite bzw. auf der gegenüberliegenden Gehäuseseite betätigt, so wird der Motor von der Steuereinrichtung zunächst herunter gefahren und dann die Umschaltung in die andere Drehrichtung vorgenommnen. Alternativ könnte die Anordnung auch so getroffen sein, dass eine Umschaltung zwischen Recht- und Linkslauf nur dann ermöglicht ist, wenn der Motor steht, d.h. der Drehzahlsensor kein Signal erhält (n=0).

## Patentansprüche

1. Elektrowerkzeug mit einer Steuereinrichtung (48) zum Steuern mindestens eines Betriebsparameters, mit einem Motor (42) zum Antrieb eines Werkzeuges (34), mit mindestens drei durch einen Benutzer betätigbaren Schaltelementen (21, 23, 25, 27, 29), die mit der Steuereinrichtung (48) gekoppelt sind, und mit einem Drehzahlsensor (46) zur Überwachung der Drehzahl des Motors (42) zur Erzeugung eines Drehzahlsignals, das der Steuereinrichtung (48) zugeführt ist, wobei die Steuereinrichtung (48) derart ausgebildet ist, dass in Abhängigkeit von dem Drehzahlsignal bei gleichzeitiger Betätigung von einem ersten (21) und mindestens einem weiteren (23, 25, 27, 29) der Schaltelemente ein Steuersignal zur Änderung des Betriebsparameters ausgegeben wird, und dass in Abhängigkeit von dem Drehzahlsignal bei gleichzeitiger Betätigung des ersten und mindestens eines anderen Schaltelementes (23, 25, 27, 29) ein Steuersignal zu einer modifizierten Änderung des Betriebsparameters ausgegeben wird.

2. Elektrowerkzeug nach Anspruch 1, bei dem ein zu steuernder Betriebsparameter die Drehzahl des Motors (42) ist, und wobei die Steuereinrichtung (48) derart ausgebildet ist, dass bei laufendem Motor (Drehzahl n>0) und bei gleichzeitiger Betätigung des ersten Schaltelementes (21) und eines zweiten (23) Schaltelementes (23) ein Steuersignal zur Erniedrigung der Drehzahl ausgegeben wird, und dass bei laufendem Motor (42) und bei gleichzeitiger Betätigung des ersten Schaltelementes (21) und eines dritten (25) Schaltelementes (25) ein Steuersignal zur Erhöhung der Drehzahl ausgegeben wird.

3. Elektrowerkzeug nach Anspruch 2, bei dem bei stehendem Motor (n=0) kein Steuersignal zur Veränderung der Drehzahl ausgegeben wird.

4. Elektrowerkzeug nach Anspruch 2 oder 3, bei dem die Steuereinrichtung derart ausgebildet ist, dass bei gleichzeitiger Betätigung des ersten (21) und zweiten (23) Schaltelementes oder des ersten (21) und dritten (25) Schaltelementes der Sollwert der Drehzahl kontinuierlich verändert wird, bis entweder ein Grenzwert erreicht ist oder mindestens eines der Schaltelemente deaktiviert wird.

5. Elektrowerkzeug nach Anspruch 2 oder 3, bei dem die Steuereinrichtung (48) derart ausgebildet ist, dass bei gleichzeitiger Betätigung des ersten (21) und zweiten (23) Schaltelementes oder des ersten (21) und dritten (25) Schaltelementes der Sollwert der Drehzahl um eine vorgegebene Drehzahlstufe, maximal jedoch bis zum Erreichen eines Grenzwertes, verändert wird, und dass zu einer weiteren Veränderung der Drehzahl die Deaktivierung zumindest eines Schaltelementes (21, 23, 25) und anschließende Betätigung des ersten und zweiten oder des ersten und dritten Schaltelementes erforderlich ist.

6. Elektrowerkzeug nach einem der Ansprüche 2 bis 5, mit einem Speichermittel zum Speichern eines zuletzt eingestellten Drehzahlsollwertes, der zum Zeitpunkt der Deaktivierung von mindestens einem (21, 23, 25, 27, 29) der zuvor zur Drehzahleinstellung betätigten Schaltelemente von der Steuereinrichtung (48) ausgegeben ist.

7. Elektrowerkzeug nach Anspruch 6, bei dem das Speichermittel (48) derart ausgebildet ist, dass ein gespeicherter Drehzahlsollwert auch nach Stillstand oder Abschalten des Motors (42) erhalten bleibt.

8. Elektrowerkzeug nach einem der vorhergehenden Ansprüche, bei dem ein zu steuernder Betriebsparameter die Einstellung Rechts-/Linkslauf ist, bei dem bei Betätigung eines ersten (21) und eines weiteren (23, 25, 27, 29) Schaltelementes ein Steuersignal zur Einstellung des Motors (42) auf Rechtslauf ausgegeben wird, und bei dem bei Betätigung des ersten (21) und mindestens eines anderen (23, 25, 27, 29) Schaltelementes ein Steuersignal zur Einstellung des Motors (42) auf Linkslauf ausgegeben wird.

9. Elektrowerkzeug nach einem der vorhergehenden Ansprüche, mit einem Gehäuse (12; 52), das einen linken Griffbereich und einen rechten Griffbereich aufweist, wobei im linken und rechten Griffbereich Aktivierungsorgane (22, 24, 26, 28; 62) für das zweite und dritte Schaltelement (23, 25) vorgesehen sind.

10. Elektrowerkzeug nach Anspruch 9, bei dem das Gehäuse (12; 52) einen mittleren Bereich aufweist, an dem ein Aktivierungsorgan (20; 60) für das erste Schaltelement (21) vorgesehen ist.

11. Elektrowerkzeug nach Anspruch 9 oder 10, bei dem die Aktivierungsorgane (20, 22, 24, 26, 28) als elastische Tastflächen ausgebildet sind, die eine Betätigung der zugeordneten Schaltelemente (21, 23, 25, 27, 29) erlauben.

12. Elektrowerkzeug nach einem der Ansprüche 9 bis 11, insbesondere Winkelschleifer (10), bei dem das Gehäuse (12) im Wesentlichen stabförmig ausgebildet ist und an einem Ende des Gehäuses (12) ein Getriebekopf (14) vorgesehen ist, an dem das erste Schaltelement (21) aufgenommen ist, während das zweite (22) und dritte (24) Schaltelement auf der linken und rechten Gehäuseseite vorgesehen sind.

13. Elektrowerkzeug nach Anspruch 12, bei dem das Gehäuse (12) derart bemessen ist, dass ein Umgreifen mit einer Hand ermöglicht ist, wobei die elastischen Tastflächen für das zweite und dritte Schaltelement (22, 24) im Griffbereich von Daumen einerseits und Zeigefinger oder Mittelfinger andererseits angeordnet sind.

14. Elektrowerkzeug nach einem der Ansprüche 9 bis 11, insbesondere Schrauber oder Bohrer (50), bei dem das Gehäuse (52) im Wesentlichen pistolenförmig ausgebildet ist, wobei die Tastfläche (60) für das erste Schaltelement (21) in der Mitte eines Pistolengriffs (54) im Griffbereich vom Zeigefinger angeordnet ist und die Tastflächen für das zweite und dritte Schaltelement an der rechten und linken Gehäuseseite angeordnet sind.

15. Elektrowerkzeug nach einem der Ansprüche 2 bis 14, bei dem ein viertes (27) und ein fünftes (29) Schaltelement vorgesehen sind, wobei die Steuereinrichtung (48) derart ausgebildet ist, dass zur Drehzahlerniedrigung das erste Schaltelement (21) und wahlweise das zweite (23) oder vierte (27) Schaltelement und zur Drehzahlerhöhung das erste (21) und wahlweise das dritte (25) oder fünfte (29) Schaltelement zu betätigen sind.

16. Elektrowerkzeug nach Anspruch 12 und 15, bei dem im Bereich des dem Getriebekopf (14) gegenüberliegenden Endes des Gehäuses (12) Tastflächen (26, 28) zur Betätigung des vierten und fünften Schaltelementes auf der linken und rechten Gehäuseseite angeordnet sind.

17. Elektrowerkzeug nach einem der vorhergehenden Ansprüche, bei dem die Steuereinrichtung (48) derart ausgebildet ist, dass ein Einschalten des Motors (42) nur bei gleichzeitiger Betätigung von mindestens zwei Schaltelementen (23, 25, 27, 29) ermöglicht ist.

18. Elektrowerkzeug nach Anspruch 17, bei dem die Steuereinrichtung (48) derart ausgebildet ist, dass ein Einschalten des Motors (42) nur bei gleichzeitiger Betätigung eines Schaltelementes (23, 25) im vorderen Bereich des Gehäuses (12) und eines Schaltelementes (27, 29) im hinteren Bereich des Gehäuses (12) ermöglicht ist.

19. Elektrowerkzeug nach einem der vorhergehenden Ansprüche, das ferner ein optisches Indikatorelement (30) zur Anzeige eines eingestellten Betriebsparameters aufweist.

20. Elektrowerkzeug nach einem der vorhergehenden Ansprüche, bei dem mindestens eines der Schaltelemente (21, 23, 25, 27, 29) als optisches Schaltelement ausgebildet ist, mittels dessen ein von einem Sendeleiter ausgesandter Lichtstrahl, der einem Empfangsleiter zugeführt wird, beeinflusst wird und die Veränderung des in den Empfangsleiter eingekoppelten Lichtsignals zur Erzeugung eines Schaltsignals ausgewertet wird.

21. Elektrowerkzeug nach einem der vorhergehenden Ansprüche, bei dem mindestens eines der Schaltelemente (21, 23, 25, 27, 29) als Mikroschalter ausgebildet ist, der in einem Signalstromkreis liegt.

22. Verfahren zur Steuerung mindestens eines Betriebsparameters eines Elektrowerkzeuges (10; 50), das einen Motor (42) zum Antrieb eines Werkzeuges (34), sowie mindestens drei durch einen Benutzer betätigbare Schaltelemente (21, 23, 25, 27, 29) aufweist, die mit einer Steuereinrichtung (48) zur Steuerung des Betriebsparameters gekoppelt sind, mit folgenden Schritten:
- Überwachen der Drehzahl des Motors (42);
- Überwachen der Betriebszustände der Schaltelemente (21, 23, 25, 27, 29);
- Steuern eines Betriebsparameters in Abhängigkeit von der Drehzahl des Motors (42) und von den Schaltzuständen der Schaltelemente (21, 23, 25, 27, 29), wobei nur bei einer bestimmten Kombination, bei der ein Schaltelement (21) und mindestens ein weiteres Schaltelement (23, 25, 27, 29) gleichzeitig betätigt werden, ein Steuersignal zur Änderung des Betriebsparameters ausgegeben wird, während bei einer bestimmten anderen Kombination, bei der das Schaltelement (21) und mindestens ein anderes Schaltelement (23, 25, 27, 29) gleichzeitig betätigt werden, ein modifiziertes Steuersignal zu einer modifizierten Änderung des Betriebsparameters ausgegeben wird.

23. Verfahren nach Anspruch 22, bei dem als Betriebsparameter die Drehzahl des Motors (42) gesteuert wird und nur bei laufendem Motor (n>0) und bei gleichzeitiger Betätigung des ersten (21) und eines weiteren (23, 27) Schaltelementes ein Steuersignal zur Drehzahlerniedrigung ausgegeben wird und bei gleichzeitiger Betätigung des ersten (21) und eines anderen (25, 29) Schaltelementes ein Steuersignal zur Drehzahlerhöhung ausgegeben wird.

24. Verfahren nach Anspruch 22 oder 23, bei dem als Betriebsparameter die Einstellung Rechts-/Linkslauf gesteuert wird und bei Betätigung eines ersten und eines weiteren Schaltelementes ein Steuersignal zur Einstellung des Motors auf Rechtslauf ausgegeben wird, und bei dem bei Betätigung des ersten und mindestens eines anderen Schaltelementes ein Steuersignal zur Einstellung des Motors auf Linkslauf ausgegeben wird.

25. Verfahren nach einem der Ansprüche 22 bis 24, bei dem ein Anlaufen des Motors (42) nur dann ermöglicht wird, wenn mindestens zwei der Schaltelemente (21, 23, 25, 27, 29) gleichzeitig betätigt werden.

26. Verfahren nach einem der Ansprüche 22 bis 25, bei dem bei laufendem Motor (42) bei einer Deaktivierung bestimmter Schaltelemente ein Signal zum Anhalten des Motors (42) erzeugt wird.

27. Verfahren nach Anspruch 21 oder 22, bei dem bei laufendem Motor (42) bei einer Deaktivierung aller Schaltelemente (21, 23, 25, 27, 29) ein Signal zum Bremsen des Motors (42) erzeugt wird.

28. Verfahren nach einem der Ansprüche 22 bis 25, gemäß dem zum Einschalten des Motors (42) mindestens ein Schaltelement (23, 25) in einem vorderen Griffbereich eines Gehäuses des Elektrowerkzeuges und mindestens ein Schaltelement (27, 29) in einem hinteren Griffbereich gleichzeitig betätigt werden müssen.

## Claims

1. An electric power tool comprising a control device (48) for controlling at least one operating parameter, a motor (42) for driving a tool (34), at least three switching elements (21, 23, 25, 27, 29) activatable by a user, which are coupled to the control device (48), and a speed sensor (46) for monitoring the speed of the motor (42) to generate a speed signal, which is fed to the control device (48), the control device (48) being configured in such a way that, in dependence on the speed signal, with simultaneous activation of a first (21) and at least one other (23, 25, 27, 29) of the switching elements, a control signal for changing the operating parameter is output, and in that, in dependence on the speed signal, with activation of the first and at least one other switching element (23, 25, 27, 29), a control signal for modified changing of the operating parameter is output.

2. The electric power tool according to claim 1, wherein an operating parameter to be controlled is the speed of the motor (42), and the control device (48) is formed in such a way that, with the motor running (speed n>0) and with simultaneous activation of the first switching element (21) and a second switching element (23), a control signal for reducing the speed is output, and in that, with the motor (42) running and with simultaneous activation of the first switching element (21) and a third switching element (25), a control signal for increasing the speed is output.

3. The electric power tool according to claim 2, wherein, with the motor stationary (n=0), no control signal for changing the speed is output.

4. The electric power tool according to 2 or 3, wherein the control device is formed in such a way that, with simultaneous activation of the first (21) and second (23) switching elements or the first (21) and third (25) switching elements, the desired value of the speed is continuously changed, until either a threshold value is reached or at least one of the switching elements is deactivated.

5. The electric power tool according to claim 2 or 3, in which the control device (48) is configured so that, with simultaneous activation of the first (21) and second (23) switching elements or the first (21) and third (25) switching elements, the desired value of the speed is changed by a predetermined speed value, but at most until a threshold value is reached, and in that, for further changing of the speed, the deactivation of at least one switching element (21, 23, 25) and subsequent activation of the first and second switching elements or the first and third switching elements is required.

6. The electric power tool according to any of claims 2 to 5, with a memory means for storing a last-set desired speed value, which is output by the control device (48) at the time of the deactivation of at least one (21, 23, 25, 27, 29) of the switching elements previously activated for speed setting.

7. The electric power tool according to claim 6, in which the memory means (48) is formed in such a way that a stored desired speed value is retained even after the motor (42) is at a standstill or is switched off.

8. The electric power tool according to any of the preceding claims, wherein an operating parameter to be controlled is the setting of right-hand/left-hand rotation, wherein a control signal for setting the motor (42) to right-hand rotation is output with activation of a first (21) and a further (23, 25, 27, 29) switching element, and in which a control signal for setting the motor (42) to left-hand rotation is output with activation of the first (21) and at least one other (23, 25, 27, 29) switching element.

9. The electric power tool according to one of the preceding claims, with a housing (12; 52) which has a left-hand gripping region and a right-hand gripping region, actuating members (22, 24, 26, 28; 62) for the second and third switching elements (23, 25) being provided in the left-hand and right-hand gripping regions.

10. The electric power tool according to claim 9, wherein the housing (12; 52) has a central region, at which an activating member (20; 60) for the first switching element (21) is provided.

11. The electric power tool according to claim 9 or 10, wherein the activating members (20, 22, 24, 26, 28) are formed as flexible pushbuttons which allow actuation of the assigned switching elements (21, 23, 25, 27, 29).

12. The electric power tool according to any of claims 9 to 11, in particular an angle grinder (10), wherein the housing (12) is formed substantially in a bar-shaped manner and has at one end of the housing (12) a gearhead (14), on which the first switching element (21) is mounted, while the second (22) and third (24) switching elements are provided on the left-hand and right-hand sides of the housing.

13. The electric power tool according to claim 12, in which the housing (12) is dimensioned in such a way that grasping with one hand is made possible, the flexible pushbuttons for the second and third switching elements (22, 24) being arranged in the gripping region of the thumb on the one side and the index finger or middle finger on the other side.

14. The electric power tool according to any of claims 9 to 11, in particular a screwdriver or drill (50), wherein the housing (52) is formed substantially in a pistol-shaped manner, the pushbutton (60) for the first switching element (21) being arranged in the centre of a pistol grip (54) in the gripping region of the index finger and the pushbuttons for the second and third switching elements being arranged on the right-hand and left-hand sides of the housing.

15. The electric power tool according to any of claims 2 to 14, in which a fourth (27) and a fifth (29) switching element are provided, the control device (48) being formed in such a way that the first switching element (21) and optionally the second (23) or fourth (27) switching element have to be activated for reducing the speed and the first (21) and optionally the third (25) or fifth (29) switching element have to be activated for increasing the speed.

16. The electric power tool according to claims 12 and 15, wherein pushbuttons (26, 28) for activating the fourth and fifth switching elements are arranged on the left-hand and right-hand sides of the housing in the region of the end of the housing (12) that is opposite from the gearhead (14).

17. The electric power tool according to any of the preceding claims, wherein the control device (48) is configured so that switching on of the motor (42) is made possible only with simultaneous activation of at least two switching elements (23, 25, 27, 29).

18. The electric power tool according to claim 17, wherein the control device (48) is configured so that switching on of the motor (42) is made possible only with simultaneous activation of a switching element (23, 25) in the front region of the housing (12) and a switching element (27, 29) in the rear region of the housing (12).

19. The electric power tool according to any of the preceding claims, which further has an optical indicator element (30) to display a set operating parameter.

20. The electric power tool according to any of the preceding claims, wherein at least one of the switching elements (21, 23, 25, 27, 29) is formed as an optical switching element, by means of which a light beam which is emitted by a transmitting conductor and fed to a receiving conductor is influenced and the changing of the light signal coupled into the receiving conductor is evaluated to generate a switching signal.

21. The electric power tool according to any of the preceding claims, wherein at least one of the switching elements (21, 23, 25, 27, 29) is formed as a microswitch which lies in a signal circuit.

22. A method for controlling at least any operating parameter of an electric power tool (10; 50) which has a motor (42) for driving a tool (34) and at least three switching elements (21, 23, 25, 27, 29) which are coupled to a control device (48) for controlling the operating parameter, with the following steps:
- monitoring the speed of the motor (42);
- monitoring the operating states of the switching elements (21, 23, 25, 27,29);
- controlling an operating parameter in dependence on the speed of the motor (42) and the switching states of the switching elements (21, 23, 25, 27, 29), wherein only at a specific combination, at which a switching element(21) and at least a further switching element (23, 25, 27, 29) are activated simultaneously, a control signal for changing the operating parameter is output, while with a specific different combination, at which the switching element (21) and at least a further switching element (23, 25, 27, 29) are activated simultaneously at modified control signal for a modified change of the operating parameter is output.

23. The method according to claim 22, wherein the speed of the motor (42) is controlled as the operating parameter and only with the motor running (n>0) and with simultaneous activation of the first (21) and a further (23, 27) switching element is a control signal for reducing the speed output, and with simultaneous activation of the first (21) and another (25, 29) switching element is a control signal for increasing the speed output.

24. The method according to claim 22 or 23, in which the setting of right-hand/left-hand rotation is controlled as the operating parameter and a control signal for setting the motor to right-hand rotation being output with activation of a first and a further switching element, and a control signal for setting the motor to left-hand rotation being output with activation of the first and at least one other switching element.

25. The method according to any of claims 22 to 24, in which starting-up of the motor (42) is only made possible if at least two of the switching elements (21, 23, 25, 27, 29) are activated simultaneously.

26. The method according to any of claims 22 to 25, in which a signal for stopping the motor (42) is generated with the motor (42) running when specific switching elements are deactivated.

27. The method according to claim 21 or 22, wherein a signal for braking the motor (42) is generated with the motor (42) running when all the switching elements (21, 23, 25, 27, 29) are deactivated.

28. The method according to any of claims 22 to 25, according to which at least one switching element (23, 25) in a front gripping region of a housing of the electric power tool and at least one switching element (27, 29) in a rear gripping region must be activated simultaneously to switch on the motor (42).

## Revendications

1. Outil électrique présentant
un dispositif de commande (48) qui commande au moins un paramètre de fonctionnement,
un moteur (42) qui entraîne un outil (34),
au moins trois éléments de commutation (21, 23, 25, 27, 29) aptes à être actionnés par l'utilisateur et raccordés au dispositif de commande (48) et
un capteur (46) de vitesse de rotation qui surveille la vitesse de rotation du moteur (42) en vue de former un signal de vitesse de rotation apporté au dispositif de commande (48),
le dispositif de commande (48) étant configuré de telle sorte qu'en fonction du signal de vitesse de rotation, un signal de commande qui modifie le paramètre de fonctionnement est délivré lors d'un actionnement simultané d'un premier élément de commutation (21) et d'au moins un autre élément de commutation (23, 25, 27, 29) et qu'un signal de commande qui modifie d'une autre manière le paramètre de fonctionnement est délivré en fonction du signal de vitesse de rotation lors d'un actionnement simultané du premier élément de commutation et d'au moins un autre élément de commutation (23, 25, 27, 29).

2. Outil électrique selon la revendication 1, dans lequel un paramètre de fonctionnement à commander est la vitesse de rotation du moteur (42), le dispositif de commande (48) étant configuré de telle sorte que lorsque le moteur tourne (vitesse de rotation n > 0) et que le premier élément de commutation (21) et un deuxième élément de commutation (23) sont actionnés simultanément, un signal de commande qui diminue la vitesse de rotation est délivré et en ce que lorsque le moteur (42) tourne et que le premier élément de commutation (21) et un troisième élément de commutation (25) sont actionnés simultanément, un signal de commande qui augmente la vitesse de rotation est délivré.

3. Outil électrique selon la revendication 2, dans lequel, lorsque le moteur est à l'arrêt (n = 0), aucun signal de commande en vue de modifier la vitesse de rotation n'est délivré.

4. Outil électrique selon les revendications 2 ou 3, dans lequel le dispositif de commande est configuré de telle sorte que lorsque le premier élément de commutation (21) et le deuxième élément de commutation (23) ou le premier élément de commutation (21) et le troisième élément de commutation (25) sont actionnés simultanément, la valeur de consigne de la vitesse de rotation est modifiée de manière continue jusqu'à ce qu'une valeur limite soit atteinte ou qu'au moins l'un des éléments de commutation soit désactivé.

5. Outil électrique selon les revendications 2 ou 3, dans lequel le dispositif de commande (48) est configuré de telle sorte que lorsque le premier élément de commutation (21) et le deuxième élément de commutation (23) ou le premier élément de commutation (21) et le troisième élément de commutation (25) sont actionnés simultanément, la valeur de consigne de la vitesse de rotation est modifiée d'un pas prédéterminé de vitesse de rotation, au plus jusqu'à ce qu'une valeur limite soit atteinte, et en ce que pour encore modifier la vitesse de rotation, la désactivation d'au moins un élément de commutation (21, 23, 25) et ensuite l'actionnement du premier et du deuxième ou du premier et du troisième élément de commutation sont nécessaires.

6. Outil électrique selon l'une des revendications 2 à 5, présentant un moyen de mémoire qui conserve une valeur de consigne de vitesse de rotation établie en dernier lieu et délivrée par le dispositif de commande (48) à l'instant de la désactivation d'au moins un des éléments de commutation (21, 23, 25, 27, 29) actionnés précédemment pour régler la vitesse de rotation.

7. Outil électrique selon la revendication 6, dans lequel le moyen de mémoire (48) est configuré de telle sorte qu'une valeur de consigne de vitesse de rotation conservée en mémoire soit conservée même après l'arrêt ou le débranchement du moteur (42).

8. Outil électrique selon l'une des revendications précédentes, dans lequel un des paramètres de fonctionnement à commander est le réglage de la marche vers la gauche et/ou vers la droite, dans lequel lors de l'actionnement d'un premier élément de commutation (21) et d'un autre élément de commutation (23, 25, 27, 29), un signal de commande qui règle le moteur (42) sur la marche vers la droite est délivré et dans lequel lors de l'actionnement du premier élément de commutation (21) et d'au moins un autre élément de commutation (23, 25, 27, 29), un signal de commande qui règle le moteur (42) vers la gauche est délivré.

9. Outil électrique selon l'une des revendications précédentes, présentant un boîtier (12; 52) qui présente une partie de poignée gauche et une partie de poignée droite, des organes d'actionnement (22, 24, 26, 28; 62) du deuxième et du troisième élément de commutation (23, 25) étant prévus dans la partie gauche et dans la partie droite.

10. Outil électrique selon la revendication 9, dans lequel le boîtier (12; 52) présente une partie centrale sur laquelle un organe d'actionnement (20; 60) du premier élément de commutation (21) est prévu.

11. Outil électrique selon les revendications 9 ou 10, dans lequel les organes d'actionnement (20, 22, 24, 26, 28) sont configurés sous la forme de surfaces élastiques de touche qui permettent d'actionner les éléments de commutation (21, 23, 25, 27, 29) associés.

12. Outil électrique selon l'une des revendications 9 à 11, en particulier meuleuse d'angle (10), dans lequel le boîtier (12) est configuré essentiellement en barreau et dans lequel une tête de transmission (14) est prévue à une extrémité du boîtier (12) sur laquelle le premier élément de commutation (21) est repris, tandis que le deuxième élément de commutation (22) et le troisième élément de commutation (24) sont prévus sur le côté gauche et sur le côté droit du boîtier.

13. Outil électrique selon la revendication 12, dans lequel le boîtier (12) est dimensionné de manière à pouvoir être saisi à la main, les surfaces élastiques de touche prévues pour le deuxième et le troisième élément de commutation (22, 24) étant disposées d'une part au niveau du pouce et d'autre part au niveau de l'index ou du majeur.

14. Outil électrique selon l'une des revendications 9 à 11, en particulier visseuse ou foreuse (50), dans lequel le boîtier (52) est configuré essentiellement en forme de pistolet, la surface de touche (60) prévue pour le premier élément de commutation (21) étant disposée au milieu de la poignée (54) du pistolet, au niveau de la saisie par l'index, les surfaces de touche pour le deuxième et le troisième élément de commutation étant prévues sur le côté droit et sur le côté gauche du boîtier.

15. Outil électrique selon l'une des revendications 2 à 14, dans lequel un quatrième élément de commutation (27) et un cinquième élément de commutation (29) sont prévus, le dispositif de commande (48) étant configuré de telle sorte que pour diminuer la vitesse de rotation, le premier élément de commutation (21) et sélectivement le deuxième élément de commutation (23) ou le quatrième élément de commutation (27) doivent être actionnés, tandis que pour augmenter la vitesse de rotation, le premier élément de commutation (21) et sélectivement le troisième élément de commutation (25) ou le cinquième élément de commutation (29) doivent être actionnés.

16. Outil électrique selon les revendications 12 et 15, dans lequel au niveau de l'extrémité du boîtier (12) situé face à la tête de transmission (14), des surfaces de touche (26, 28) permettant d'actionner le quatrième et le cinquième élément de commutation sont disposées sur le côté gauche et sur le côté droit du boîtier.

17. Outil électrique selon l'une des revendications précédentes, dans lequel le dispositif de commande (48) est configuré de manière à permettre le branchement du moteur (42) uniquement lorsque l'on actionne simultanément au moins deux éléments de commutation (23, 25, 27, 29).

18. Outil électrique selon la revendication 17, dans lequel le dispositif de commande (48) est configuré de telle sorte à ne permettre le branchement du moteur (42) que lors d'un actionnement simultané d'un élément de commutation (23, 25) situé dans la partie avant du boîtier (12) et d'un élément de commutation (27, 29) situé dans la partie arrière du boîtier (12).

19. Outil électrique selon l'une des revendications précédentes, présentant en outre un élément (30) d'indication optique qui affiche le paramètre de fonctionnement réglé.

20. Outil électrique selon l'une des revendications précédentes, dans lequel au moins l'un des éléments de commutation (21, 23, 25, 27, 29) est configuré comme élément de commutation optique au moyen duquel un faisceau lumineux émis par un guide d'émission et apporté à un conducteur de réception est influencé, la modification du signal lumineux injecté dans le conducteur de réception étant évaluée pour former un signal de commutation.

21. Outil électrique selon l'une des revendications précédentes, dans lequel au moins l'un des éléments de commutation (21, 23, 25, 27, 29) est configuré comme microcommutateur placé dans un circuit de courant de signalisation.

22. Procédé de commande d'au moins un paramètre de fonctionnement d'un outil électrique (10; 50) qui présente un moteur (42) qui entraîne un outil (34), ainsi qu'au moins trois éléments de commutation (21, 23, 25, 27, 29) qui peuvent être actionnés par un utilisateur et qui sont raccordés à un dispositif de commande (48) qui commande le paramètre de fonctionnement, le procédé présentant les étapes suivantes :
surveillance de la vitesse de rotation du moteur (42),
surveillance des états de fonctionnement des éléments de commutation (21, 23, 25, 27, 29),
commande d'un paramètre de fonctionnement en fonction de la vitesse de rotation du moteur (42) et des états de commutation des éléments de commutation (21, 23, 25, 27, 29), un signal de commande modifiant le paramètre de fonctionnement n'étant délivré que dans une combinaison définie dans laquelle un élément de commutation (21) et au moins un autre élément de commutation (23, 25, 27, 29) sont actionnés simultanément, tandis que dans une autre combinaison définie dans laquelle l'élément de commutation (21) et au moins un autre élément de commutation (23, 25, 27, 29) sont actionnés simultanément, un signal de commande modifié est délivré pour modifier différemment le paramètre de fonctionnement.

23. Procédé selon la revendication 22, dans lequel le paramètre de fonctionnement commandé est la vitesse de rotation du moteur (42) et un signal de commande qui abaisse la vitesse de rotation n'est délivré que lorsque le moteur fonctionne (n > 0) et qu'en même temps le premier élément de commutation (21) et un autre élément de commutation (23, 27) sont actionnés simultanément, un signal de commande augmentant la vitesse de rotation étant délivré lorsque le premier élément de commutation (21) et un autre élément de commutation (25, 29) sont actionnés simultanément.

24. Procédé selon les revendications 22 ou 23, dans lequel le paramètre de fonctionnement commandé est le réglage de la marche vers la droite ou vers la gauche et dans lequel un signal de commande qui règle le moteur sur la marche vers la droite est délivré lorsqu'un premier et un autre élément de commutation sont actionnés et dans lequel un signal de commande qui règle le moteur sur la marche vers la gauche est délivré lorsque le premier et au moins un autre élément de commutation sont actionnés.

25. Procédé selon l'une des revendications 22 à 24, dans lequel le démarrage du moteur (42) n'est possible que si au moins deux des éléments de commutation (21, 23, 25, 27, 29) sont actionnés simultanément.

26. Procédé selon l'une des revendications 22 à 25, dans lequel un signal d'arrêt du moteur (42) est délivré lorsque le moteur (42) tourne et que certains éléments de commutation sont désactivés.

27. Procédé selon les revendications 21 ou 22, dans lequel un signal de freinage du moteur (42) est délivré lorsque le moteur (42) tourne et que tous les éléments de commutation (21, 23, 25, 27, 29) sont désactivés.

28. Procédé selon l'une des revendications 22 à 25, dans lequel pour brancher le moteur (42), au moins un élément de commutation (23, 25) situé dans la partie avant de saisie du boîtier de l'outil électrique et au moins un élément de commutation (27, 29) situé dans la partie arrière de saisie doivent être actionnés simultanément.
